# EUROPEAN PATENT APPLICATION

(11) **EP 3 299 265 A1**
(43) Date of publication of application: **28.03.2018**
(21) Application number: 16205469.6
(22) Date of filing: 20.12.2016
(51) Int. Cl.: B62J 6/00, B60Q 9/00, B62J 27/00, G01S 17/00

(54) **WARNING METHOD FOR A CYCLING EQUIPMENT AND SYSTEM USING SAME**

(30) Priority: 26.09.2016 CN 201610852290
(71) Applicant: Shenzhen Qianhai Livall Iot Technology Co., Ltd., Shenzhen, Guangdong 518000 (CN)
(72) Inventor: ZHENG, Bo, Shenzhen (CN); YE, Yongzheng, Shenzhen (CN); LI, Zhiming, Shenzhen (CN); WANG, Tao, Shenzhen (CN)
(74) Representative: Awapatent AB

(57) **Abstract**

A warning method for a cycling equipment is provided. The method includes steps of: emitting a series of light beams in a direction facing away from a rear of the cycling equipment sequentially; receiving a series of reflected light beams from an object behind the cycling equipment; calculating a predetermined number of successive real-time distances between the cycling equipment and the object according to each of the light beams and the corresponding reflected light beams; and generating a first alert to the object when each of the predetermined number of successive real-time distances is less than a safety threshold, and the predetermined number of successive real-time distances decrease gradually.

## Description

### CROSS-REFERENCE TO RELATED APPLICATION AND CLAIM OF PRIORITY

This application claims priority of a China patent application serial No. 201610852290.1, titled "WARNING METHOD FOR A CYCLING EQUIPMENT AND SYSTEM USING SAME" and filed on September 26, 2016, the contents of which are incorporated by reference herein in their entirety for all intended purposes.

### TECHNICAL FIELD

The present disclosure relates to warning system and warning method, and more particularly, to a warning method for a cycling equipment, and a system using the method.

### BACKGROUND

Nowadays, cycling is very popular all around the world. On one hand, in many cities, a lot of cycling roads are built and used by cyclists only, in order to ensure security when cycling on the road. However, on the other hand, cycling in the mountain is generally dangerous, especially when the cyclist is climbing a mountain, as it is difficult for the cyclist to see backwards to know what happens behind the bicycle. The situation could be worse when a car is tracing the bicycle and getting closer to the bicycle in the dark night. An accident may be caused in this situation, resulting in unexpected damage.

### BRIEF DESCRIPTION OF THE DRAWINGS

To illustrate the technical solution according to embodiments of the present disclosure more clearly, drawings to be used in the description of the embodiments are described in brief as follows. Obviously, the drawings in the following description are merely some embodiments of the present disclosure. It is to be noted that for those ordinarily skilled in the art, other drawings can be fetched according to these drawings without doing any creative work.
FIG. 1 is a schematic view of a warning system, according to a first embodiment of the present invention;
FIG. 2 is a schematic view of the warning system of FIG. 1, showing the warning system is used on a bicycle;
FIG. 3 is a flow chart of a warning method, according to a second embodiment of the present invention;
FIG. 4 is a schematic view of a warning system, according to a third embodiment of the present invention;
FIG. 5 is a schematic view of the warning system of FIG. 4, showing the warning system is used on a bicycle;
FIG. 6 is a flow chart of a warning method, according to a fourth embodiment of the present invention.

### PREFERRED EMBODIMENTS

The technical solution in the embodiments of the present disclosure will be described clearly and completely accompanying with drawings of embodiments of the present disclosure as follows. Apparently, the described embodiments are only a part of the embodiments of the present disclosure, but not all the embodiments. Based on the embodiments of the present disclosure, all other embodiments achieved by those ordinarily skilled in the art without doing any creative work, should be included in the scope of the present disclosure.

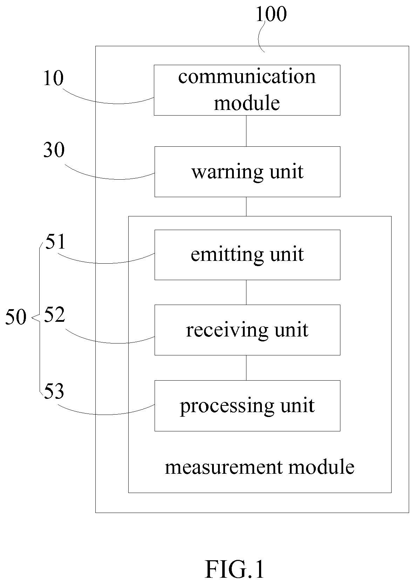

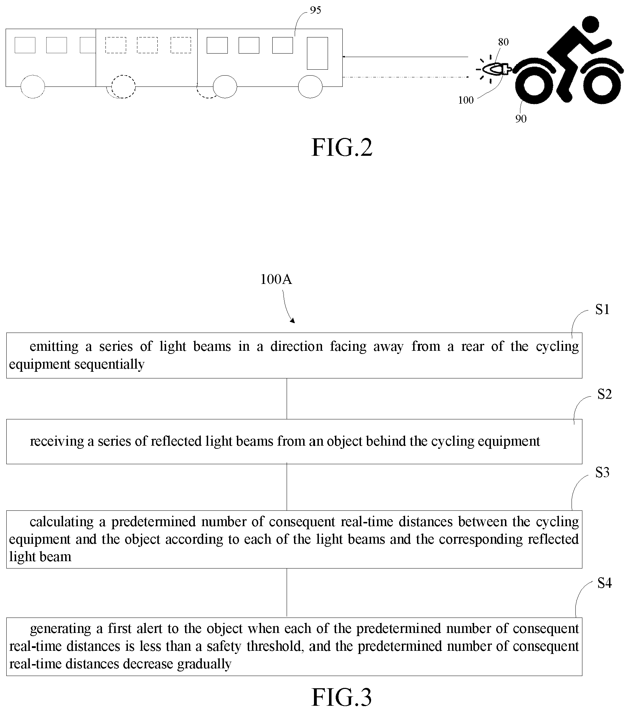

Referring to FIG. 1 and FIG. 2, a warning system 100 according to a first embodiment of the present disclosure includes a communication module 10, a warning unit 30, and a measurement module 50.

The communication module 10, the warning unit 30, and the measurement module 50 can be secured in an enclosure 80 (see FIG.2). The enclosure can be made of transparent material, such as transparent plastic, or glass, etc.

In application, the enclosure 80 can be arranged on a rear of a cycling equipment, such as a bicycle 90, as shown in FIG. 2.

The communication module 10 can be a BLE (Bluetooth Low Energy) chip. The warning unit 30 includes a number of LEDs. The measurement module 50 includes an emitting unit 51, a receiving unit 52, and a processing unit 53 (see FIG.1). The emitting unit 51 can be a laser emitter. The receiving unit 52 can be a laser receiver. In this embodiment, the laser emitter emits infrared invisible laser.

Referring to FIG. 2 and 3, a warning method 100A for a cycling equipment according to a second embodiment of the present disclosure includes step S1 to step S4. The warning method 100 uses the warning system 100 in the first embodiment.

In step S1, the emitting unit 51 emits a series of light beams in a direction facing away from a rear of the bicycle 90 sequentially. In this embodiment, the light beams are in a form of laser pulses and emitted in an interval of 0.1 second (10Hz frequency). s

In step S2, as shown in FIG. 2, an object, such as a bus 95 is driving after the bicycle 90. The laser pulses are reflected by the bus 95, and the reflected laser pulses are received by the receiving unit 52 in sequence.

In step S3, a predetermined number of successive real-time distances between the bicycle 90 and the bus 95 are calculated by the processing unit 53 according to each of the light beams from the emitting unit 51 and the corresponding reflected light beam. In application, a time delay between an emitted laser pulse and a reflected laser pulse can be measured, and thus a real-time distance between the bicycle 90 and the bus 95 can be calculated based on the time delay and the speed of light.

In this embodiment, the predetermined number of successive real-time distances are compared by the processing unit 53 continuously. That is, a current real-time distance is used to be compared with several previous calculated distances.

In step S4, the warning unit 30 generates a first alert when each of the predetermined number of successive real-time distances is less than a safety threshold, and the predetermined number of successive real-time distances decrease gradually.

In one embodiment, the predetermined number of successive real-time distances is three, and the safety threshold is 20m. In one example, a first, a second, and a third real-time distance between the bicycle 90 and the bus 95 are obtained in sequence according to three successive laser pulse. In one example, the first real-time distance is 20m, the second real-time distance is 19.5m, and the third real-time distance is 19m. That is, the measured real-time distances decrease gradually to show that the bus 95 is getting closer to the bicycle 90. As such, the processing unit 53 generates an instruction to the warning unit 30. The warning unit 30 accordingly generates a first alert. In alternative embodiment, the predetermined number of successive real-time distances can be four, five, or other number. The safety threshold can be preset according to practical experience. For example, the safety threshold can be 30m, 40m, etc.

The first alert may be in the form of voice, light, character, etc. In this embodiment, the first alert is in the form of light. That is, the warning unit 30 responds to the instruction and flashes to remind a driver in the bus 95 to slow down, thus avoiding an accident. In alternative embodiment, the bus 95 can be other object, such as a motorcycle, or even an animal.

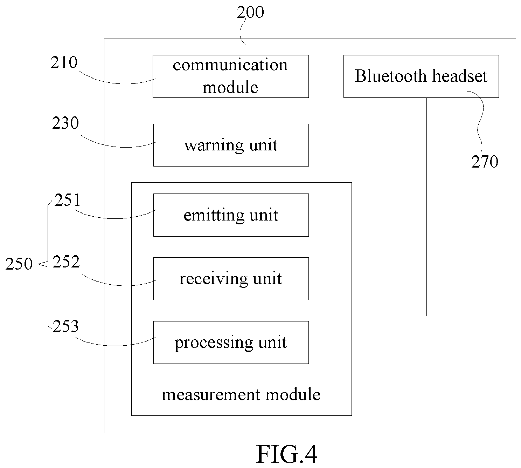

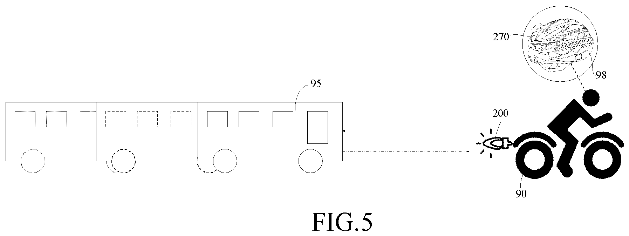

Referring to FIG. 4 and FIG. 5, a warning system 200 according to a third embodiment of the present disclosure is shown. The warning system 200 is similar to the warning system 100 in the first embodiment, and includes a communication module 210, a warning unit 230, and a measurement module 250. The measurement module 250 includes an emitting unit 251, a receiving unit 252, and a processing unit 253. However, the warning system 200 in the third embodiment further includes a Bluetooth headset 270. In this embodiment, the warning unit 230 is a speaker. In use, the Bluetooth headset 270 is mounted on a helmet 98, as shown in FIG. 5. The helmet 98 is worn on the cyclists' head.

In this embodiment, the speaker is used to respond to the instruction from the processing unit 253, thus generating an alarm sound to remind a driver in the bus 95 to slow down, thus avoiding an accident. In addition, the communication module 210 is used to receive the instruction, and transmit the instruction to the Bluetooth headset 270. In this way, the Bluetooth headset 270 generates an alarm sound to remind the cyclist to be careful, thus avoiding an accident.

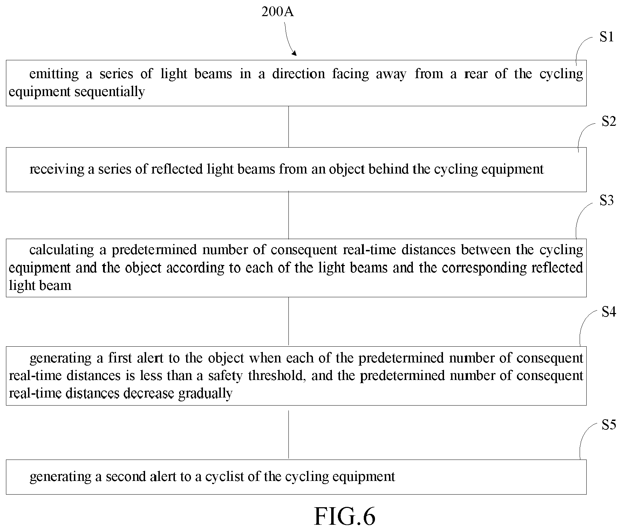

Referring to FIG. 6, a warning method 200A for a cycling equipment according to a fourth embodiment of the present disclosure is shown. The warning method 100 uses the warning system 200 in the second embodiment.

The warning method 200A in the fourth embodiment is similar to the warning method 100A in the second embodiment. However, in the fourth embodiment, the method 200A further includes a step S5, as well as step S1 to step S4.

The step S5 includes: generating a second alert to a cyclist of the cycling equipment when each of the predetermined number of successive real-time distances is less than a safety threshold, and the predetermined number of successive real-time distances decrease gradually.

In this embodiment, the communication module 210 is used to receive the instruction from the processing unit 253, and transmit the instruction to the Bluetooth headset 270. In this way, the Bluetooth headset 270 generates an alarm sound to remind the cyclist to be careful, thus avoiding an accident. That is, the second alert is in the form of voice.

Overall, the warning method (100A or 200A) and the warning system (100 or 200) in the above first to fourth embodiments can be used to remind an object from behind, thus avoiding an accident.

The contents described above are only preferred embodiments of the present disclosure, but the scope of the present disclosure is not limited to the embodiments. Any ordinarily skilled in the art would make any modifications or replacements to the embodiments in the scope of the present disclosure, and these modifications or replacements should be included in the scope of the present disclosure. Thus, the scope of the present disclosure should be subjected to the claims.

## Claims

1. A warning method for a cycling equipment, comprising:
emitting a series of light beams in a direction facing away from a rear of the cycling equipment sequentially;
receiving a series of reflected light beams from an object behind the cycling equipment;
calculating a predetermined number of successive real-time distances between the cycling equipment and the object according to each of the light beams and the corresponding reflected light beam; and
generating a first alert to the object when each of the predetermined number of successive real-time distances is less than a safety threshold, and the predetermined number of successive real-time distances decrease gradually.

2. The warning method of claim 1, wherein the light beams are in a form of laser pulses with a frequency of 10Hz.

3. The warning method of claim 1, wherein the predetermined number of successive real-time distances is three.

4. The warning method of claim 1, wherein the first alert is in the form of voice, light, or character.

5. The warning method of claim 1, further comprising: generating a second alert to a cyclist of the cycling equipment when each of the predetermined number of successive real-time distances is less than a safety threshold, and the predetermined number of successive real-time distances decrease gradually.

6. A warning system for a cycling equipment, comprising:
an emitting unit configured for emitting a series of light beams in a direction facing away from a rear of the cycling equipment sequentially;
a receiving unit configured for receiving a series of reflected light beams from an object behind the cycling equipment;
a processing unit configured for calculating a predetermined number of successive real-time distances between the cycling equipment and the object according to each of the light beams and the corresponding reflected light beam, thus generating an instruction when each of the predetermined number of successive real-time distances is less than a safety threshold, and the predetermined number of successive real-time distances decrease gradually; and
a warning unit configured for receiving the instruction and generating a first alert to the object.

7. The warning system of claim 6, wherein the emitting unit is a laser emitter.

8. The warning system of claim 7, wherein the emitting unit emits light beams in a form of laser pulses with a frequency of 10Hz.

9. The warning system of claim 6, comprising an enclosure arranged on a rear of the cycling equipment, and the emitting unit, the receiving unit, the processing unit, and the warning unit being secured in the enclosure.

10. The warning system of claim 9, wherein the enclosure is made of transparent material.

11. The warning system of claim 6, further comprising:
a helmet;
a Bluetooth headset mounted on the helmet; and
a communication module configured for receiving the instruction and generating a second alert to the Bluetooth headset.
